# EUROPÄISCHE PATENTANMELDUNG

(11) **EP 0 811 832 A1**
(43) Veröffentlichungstag der Anmeldung: **10.12.1997**
(21) Anmeldenummer: 96810363.0
(22) Anmeldetag: 04.06.1996
(51) Int. Cl.: G01L 19/00

(54) **Anordnung für die Druckmessung in gasförmigen Medien**

(71) Anmelder: K.K. HOLDING AG, CH-8408 Winterthur (CH)
(72) Erfinder: Engeler, Paul, 8500 Frauenfeld (CH); Sonderegger, Christof, 8413 Neftenbach (CH)

(57) **Zusammenfassung**

Die neue Messanordnung für eine Druckmessung in gasförmigen Medien besteht aus einem Befestigungselement (10) und einem davon getrennten Anschlusselement (12) für einen Drucksensor (1). Das Befestigungselement (10) wird direkt an einen Druckraum (4) für das zu messende Medium angeschlossen. Es dient gleichzeitig zur Montage und Fixierung des auf ihm drehbar gelagerten Anschlusselementes (12).

Zwischen beiden (10) und (12) ist ein schmaler Druckspalt vorhanden, der einerseits über Zufuhrkanäle (16,17) mit dem Druckraum (4) und andererseits mit der Anschlussöffnung (14) für den Drucksensor (1) in Verbindung steht.

Die Trennung der Anordnung in zwei Einzelelemente (10) und (12) erleichtert die Montage der Anordnung bei engen Platzverhältnissen und erschwerter Zugänglichkeit; darüber hinaus ermöglicht sie eine genaue Positionierung des Sensors (1) und der Signalabnahme.

## Beschreibung

Die Erfindung betrifft eine Anordnung für die Druckmessung in gasförmigen Medien.

Besonders bei der Überwachung von Brennkraftmaschinen ergeben sich häufig Probleme für die Montage und die genaue Positionierung der erforderlichen Druckmessanordnungen, da beispielsweise an oder auf den Zylinderdeckeln wenig Platz vorhanden und die Zugänglichkeit erschwert sind.

Es ist daher die Aufgabe der Erfindung, einen Aufbau für eine Druckmessanordnung zu schaffen, bei dem die Montage und vor allem die korrekte Positionierung vereinfacht und erleichtert sind.

Diese Aufgabe wird nach der Erfindung gelöst durch ein an einen Druckraum für das Medium ansetzbares Befestigungselement, beispielsweise einen Bolzen oder eine Schraube, und durch ein auf dieses aufsetzbares Anschlusselement für einen Drucksensor, wobei das Befestigungselement Zufuhrkanäle für die Medienzufuhr zu einem, zwischen ihm und dem Anschlusselement gebildeten, rohrförmigen Druckspalt aufweist.

Die Trennung des Anschlusselementes für den Sensor von dem Befestigungselement ergibt für die Montage und die genaue Positionierung Freiheiten und Variationsmöglichkeiten, durch die beide stark erleichtert werden.

Dabei hat es sich als besonderer Vorteil herausgestellt, wenn das Anschlusselement drehbar auf dem Befestigungselement gelagert ist.

Für einen Einsatz bei der Überwachung einer Brennkraftmaschine hat sich bewährt, wenn die Zufuhrkanäle eine Strömungsverbindung zu einem Anschluss für ein Indizierventil einer Brennkraftmaschine und/oder für einen Kalibriersensor aufweisen; weiterhin ist es für diesen Einsatz zweckmässig, eine Strömungsverbindung der Zufuhrkanäle in die Atmosphäre vorzusehen.

Durch die zusätzlichen Elemente werden beispielsweise ein Durchspülen der Anordnung zwecks Reinigung bei Messungen des Verbrennungsdruckes oder eine Kalibrierung des eingesetzten Drucksensors ermöglicht sowie eine Druckentlastung und Entleerung der Zylinder beim langsamen "Durchdrehen" der Maschine während einer Revision.

Um die einzelnen Strömungswege voneinander abzuschliessen, kann man die Zufuhrkanäle und/oder die Strömungsverbindungen durch verstellbare Steuerorgane absperrbar gestalten.

Als Befestigungselement verwendet man zweckmässigerweise - ohne jedoch darauf beschränkt zu sein - einen Stehbolzen, in dem der Zufuhrkanal durch ein zentral angeordnetes Ventil absperrbar ist. Eine konstruktiv einfache Möglichkeit ergibt sich, wenn das Befestigungselement gleichzeitig als Montageschraube für das Anschlusselement dient.

Bei einer weiteren Ausführungsform hat es sich als günstig herausgestellt, wenn ein Absperrventil im Schraubenkopf des Befestigungselementes quer oder im Winkel zur Achsrichtung angeordnet ist.

Die Erfindung wird im folgenden anhand von Ausführungsbeispielen im Zusammenhang mit der zeichnung näher erläutert.

Es zeigen:
- Fig. 1: eine Druckmessanordnung nach dem Stand der Technik am Beispiel einer Brennkraftmaschine mit Indizierventil,
- Fig. 2: eine erste Ausführungsform der neuen Anordnung,
- Fig. 3: einen Schnitt III - III von Fig. 2, und die
- Fig. 4 bis 6: je eine weitere Ausführungsform der erfindungsgemässen Anordnung.

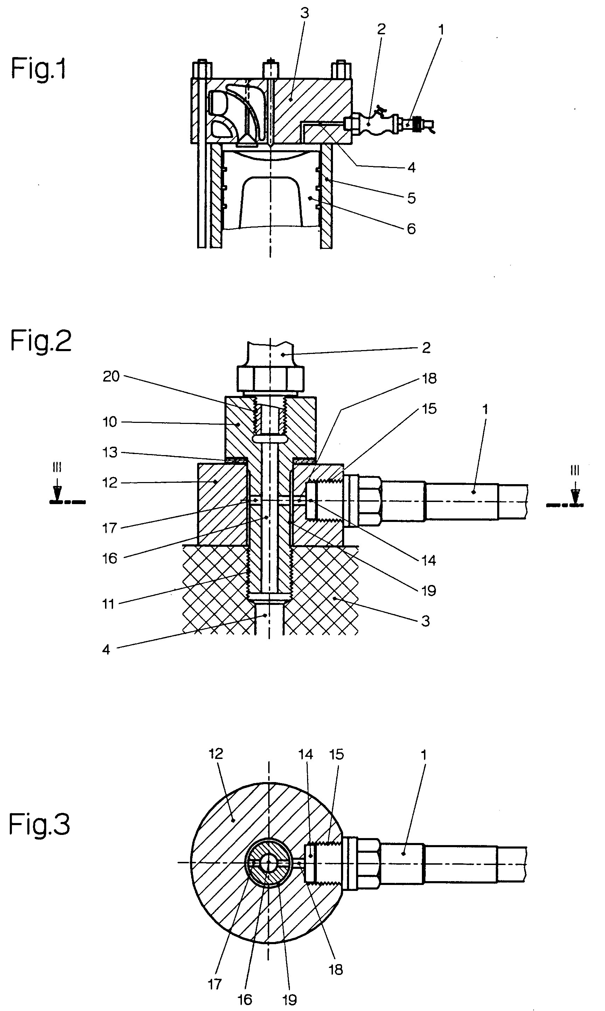

Fig. 1 zeigt, nach dem Stand der Technik, eine Montage einer Druckmessanordnung für die Überwachung einer Brennkraftmaschine. Ein Drucksensor 1 ist auf dem Indikator- oder Indizierventil 2 am Zylinderdeckel 3 der Maschine montiert und über einen Druckkanal 4 mit dem Brennraum verbunden. Der Zylinder 5 umfasst den Kolben 6.

Der Drucksensor 1 weist eine nicht gezeigte Plattenmembran auf, welche via Durchbiegung die elektrischen Werte verstellt. Solche Anordnungen sind in Fachschriften beschrieben. Das Volumen eines handelsüblichen Überwachungssensors 1 ist meist grösser als dasjenige des Indikatorventils 2, sodass sich durch die Einbaulänge meist ein schwingungsempfindliches Gebilde ergibt, das relativ viel Platz benötigt; darüber hinaus ist der Sensor 1 starr an das Indizierventil 2 angesetzt, so dass kaum Möglichkeiten für eine Korrektur seiner Positionierung gegeben sind.

Bei der erfindungsgemässen Anordnung nach Fig. 2 und 3 dient als Befestigungselement eine Montageschraube 10, die mit einem Gewinde 11 in den Zylinderdeckel 3 eingeschraubt ist. Sie durchsetzt einen als Anschlusselement für den Sensor 1 dienenden Zylinderkörper 12 und fixiert diesen auf dem Zylinderdeckel 3, wobei zwischen beiden ein Dichtring 13 eingelegt ist.

Der Zylinder 12 ist vor dem Festziehen der Schraube 10 auf deren Schaft frei drehbar und kann so in einer günstigen Lage positioniert werden, ehe er durch Anziehen der Schraube 10 fixiert wird.

Für den Anschluss des Drucksensors 1, der in bekannter Weise nach dem piezoelektrischen, piezoresistiven oder einem der anderen gebräuchlichen Messprinzipien arbeitet, besitzt der Zylinder 12 eine Bohrung 14 mit einem Gewinde 15, in das der Sensor 1 eingeschraubt wird.

Das zu messende Medium gelangt aus dem Druckkanal 4 über eine Zuleitungsbohrung 16 und eine Querbohrung 17 in einem Druckspalt 19, von dem aus eine Verbindungsbohrung 18 zur Anschlussöffnung 14 für den Sensor 1 führt. Bei diesem Ausführungsbeispiel ist die Zuleitungsbohrung 16 als Durchgangsbohrung ausgebildet, die zu einem über ein Gewinde 20 in den Kopf der Schraube 10 eingeschraubtes, nicht weiter gezeigtes Indizierventil führt.

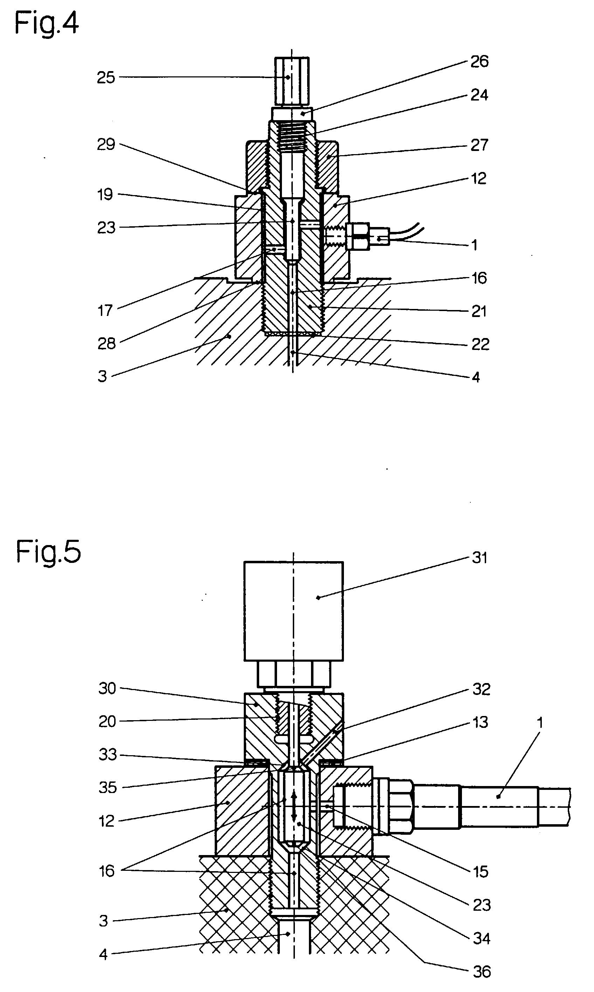

Bei der Konstruktion nach Fig. 4 dient als Befestigungselement ein Stehbolzen 21, der unter Zwischenlegen einer Dichtung 22 wiederum in den Zylinderdeckel 3 eingeschraubt ist. In den Bolzen 21 ist ein Indizierventil integriert, welches aus einem Ventilteil 23 und einem Schraubteil 24 besteht, wodurch sich der Druckkanal 4, bzw. die Zuleitungsbohrung 16 mittels einer Verstellschraube 25 und einem Feststellteil 26 öffnen bzw. schliessen lassen. Der Zylinderkörper 12 wird in diesem Beispiel mit einer Mutter 27 auf eine Dichtfläche 28 gepresst, wobei er vor seiner Fixierung wiederum in die für die Signalabnahme vom Sensor 1 beste Position gedreht werden kann. Ein weiterer Dichtring 25 dichtet den Druckspalt 19 nach oben ab. Bei geschlossenem Ventilteil 23 ist ein Austausch des Drucksensors 1 möglich, ohne dass die Brennkraftmaschine stillgesetzt werden muss.

Die Besonderheit der Ausführungsform nach Fig. 5 besteht darin, dass die als Befestigungselement dienende Montageschraube 30 neben dem Gewindeanschluss 20 für einen Kalibriersensor oder ein Indizierventil 31 eine Entlüftungsbohrung 32 aufweist, die die Zuleitungsbohrung 16 mit der Atmosphäre verbindet. In der Zuleitungsbohrung 16, die im Schaft der Schraube 30 erweitert ist, sind zwei einander gegenüberliegende Ventilsitze 33 bzw. 34 vorgesehen, durch die im Zusammenwirken mit je einer beweglichen Ventilfläche 35 bzw. 36 des von einem Antrieb 31 bewegten Ventilteiles 23 in einer Endstellung die Medienzufuhr stromaufwärts des Sensors 1 absperrbar ist, um beispielsweise wiederum einen Austausch des Sensors 1 zu ermöglichen. In der anderen Endstellung des Ventilteils 23 ist die Entlüftungsleitung 32 für den Messbetrieb verschlossen. In der in der Figur dargestellten Mittelstellung des Ventilteils 23 wird der Druckkanal 4 mit der Atmosphäre verbunden, damit beispielsweise bei Revisionsarbeiten ein "Durchdrehen" des Motors erleichtert wird oder die Anordnung durchgeblasen werden kann.

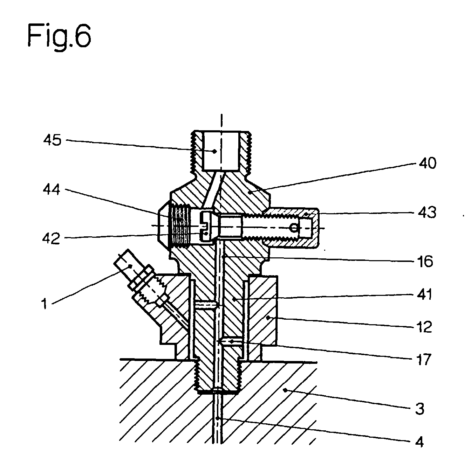

Das wiederum eine Montageschraube 41 bildende Element der Fig. 6 weist in seinem Kopf 40 einen quer zur Zuführungsleitung 16 liegenden Ventilteil 42 auf, der diese wiederum verschliesst. Der Ventilteil 42 ist auf einer Seite mit einem Feststellteil 43 versehen und endet mit seinem Ventilkörper in einer nach aussen führenden Öffnung; dieser kann durch Drehen in einem Gewinde mit Hilfe eines Steckschlüssels vom Sitz abgehoben oder auf diesen gepresst werden. Die Öffnung kann durch ein Verschlussteil 44 gegen aussen verschlossen werden. Sie weist darüber hinaus eine Strömungsverbindung zu einem Anschlussteil 45 für den Anschluss eines nicht gezeigten Kalibriergerätes auf.
- Fig. 1: 1 Drucksensor
2 Absperrmittel, z.B. Indizierventil
3 Zylinderdeckel
4 Druckkanal
5 Zylinder
6 Kolben
- Fig. 2 und 3: 10 Montageschraube als Befestigungselement
11 Gewinde
12 Zylinderkörperals Anschlusselement
13 Dichtring
14 Anschlussbohrung
15 Gewinde
16 Zuleitungsbohrung
17 Querbohrung
18 Verbindungsbohrung
19 Rohrförmiger Druckspalt
20 Gewinde
- Fig. 4: 21 Stehbolzen
22 Dichtung
23 Ventilteil
24 Schraubteil
25 Verstellschraube
26 Feststellteil
27 Mutter
28 Dichtfläche
29 Dichtring
- Fig. 5: 30 Montageschraube
31 Ventilantrieb
32 Entlüftungsbohrung
33 Ventilsitz
34 Ventilsitz
35 Ventilfläche
36 Ventilfläche
- Fig. 6: 40 Schraubenkopf
41 Montageschraube
42 Ventilteil
43 Feststellteil
44 Verschlussteil
45 Anschlussteil für Kalibriergerät

## Patentansprüche

1. Anordnung für die Druckmessung in gasförmigen Medien, gekennzeichnet durch ein an einen Druckraum (4) für das Medium ansetzbares Befestigungselement (10,21,30,41), beispielsweise einen Bolzen oder eine Schraube, und durch ein auf dieses aufsetzbares Anschlusselement (12) für einen Drucksensor (1), wobei das Befestigungselement (10,21,30,41) Zufuhrkanäle (16,17) für die Medienzufuhr zu einem zwischen ihm und dem Anschlusselement (12) gebildeten rohrförmigen Druckspalt (19) aufweist.

2. Anordnung nach Anspruch 1, dadurch gekennzeichnet, dass das Befestigungselement als Montageschraube (10,30,41) für das Anschlusselement (12) dient.

3. Anordnung nach Anspruch 1 oder 2, dadurch gekennzeichnet, dass das Anschlusselement (12) drehbar auf dem Befestigungselement (10,21,30,41) gelagert ist.

4. Anordnung nach einem der Ansprüche 1 bis 3, dadurch gekennzeichnet, dass die Zufuhrkanäle (16) eine Strömungsverbindung zu einem Anschluss (20) für ein Indizierventil (2,31) einer Brennkraftmaschine und/oder für einen Kalibriersensor aufweisen.

5. Anordnung nach einem der Ansprüche 1 bis 4, dadurch gekennzeichnet, dass die Zufuhrkanäle (16) eine Strömungsverbindung (32) in die Atmosphäre aufweisen.

6. Anordnung nach einem der Ansprüche 1 bis 5, dadurch gekennzeichnet, dass die Zufuhrkanäle (16) und/oder die Strömungsverbindungen durch verstellbare Steuerorgane (23,42) absperrbar sind.

7. Anordnung nach Anspruch 1 und 6, dadurch gekennzeichnet, dass das Befestigungselement als Stehbolzen (21) ausgebildet ist und dass der Zufuhrkanal (16) durch ein zentral angeordnetes Ventil (23) absperrbar ist.

8. Anordnung nach Anspruch 1, 2 und 6, dadurch gekennzeichnet, dass im Schraubkopf (40) des Befestigungselementes (41) ein Absperrventil (42) quer oder in einem Winkel zur Achsrichtung angeordnet ist.
